# EUROPÄISCHE PATENTANMELDUNG

(11) **EP 1 489 837 A2**
(43) Veröffentlichungstag der Anmeldung: **22.12.2004**
(21) Anmeldenummer: 04090200.9
(22) Anmeldetag: 18.05.2004
(51) Int. Cl.: H04N 5/253

(54) **Film-Scanner**

(30) Priorität: 04.06.2003 DE 10326359
(71) Anmelder: Deutsches Zentrum für Luft- und Raumfahrt e.V., 53175 Bonn (DE)
(72) Erfinder: Driescher, Hans, 15562 Rudersdorf (DE); Hilbert, Stefan, 15738 Zeuthen (DE); Eckardt, Andreas, 12524 Berlin (DE); Neidhardt, Michael, 15537 Erkner (DE); Schlesier, Cornelia, 12524 Berlin (DE); Uhlig, Matthias, 12683 Berlin (DE); Zender, Bernd, 13088 Berlin (DE)
(74) Vertreter: Zucker, Volker, Dipl.-Ing.

(57) **Zusammenfassung**

Die Erfindung betrifft einen Film-Scanner (1), umfassend eine breitbandige Bestrahlungsquelle (2) und eine Filmbühne (6), wobei die Filmbühne (6) mindestens einen Lichtdurchlass für einen sichtbaren Spektralkanal und mindestens einen Lichtdurchlass für einen IR-Kanal aufweist, wobei die Lichtdurchlässe auf zugeordnete photoelektrische Detektoren abgebildet werden, wobei der breitbandigen Bestrahlungsquelle (2) ein Langpass-Interferenzfilter (5) zugeordnet ist, das im Spektralbereich von 400 - 780 nm transparent ist, wobei dem Lichtdurchlass für den IR-Kanal eine separate IR-selektive Bestrahlungsquelle zugeordnet ist.

## Beschreibung

Die Erfindung betrifft einen Film-Scanner gemäß dem Oberbegriff des Patentanspruchs 1.

Ein Film-Scanner dient zur Umsetzung von kinematographischem Filmmaterial in elektronische Signale.

Aus der DE 197 31 530 A1 ist ein Film-Scanner bzw. Filmabtaster bekannt, umfassend eine breitbandige Bestrahlungsquelle, mittels derer das entlang einer Filmbühne transportierte Filmmaterial durchleuchtet wird. Auf der der Bestrahlungsquelle abgewandten Seite der Filmbühne sind optoelektronische Detektoren zur Erfassung eines RGB-Bildes angeordnet. Des weiteren ist auf der Seite der Bestrahlungsquelle eine weitere separate IR-Lichtquelle angeordnet, die beispielsweise als IR-LED ausgebildet ist. Der IR-Lichtquelle ist ebenfalls auf der anderen Seite der Filmbühne ein optischer Detektor zugeordnet. Die IR-Lichtquelle dient mit ihrem zugeordneten Detektor zur Perforationslocherkennung, anhand dessen eine Korrektur von Bildstandsfehlern vorgenommen werden kann. Zur Abschirmung der optischen Detektoren für das RGB-Bild vor der IR-Strahlung ist diesen ein Infrarotsperrfilter zugeordnet.

Der Erfindung liegt das technische Problem zugrunde, einen Film-Scanner zu schaffen, mittels dessen höhere Abtastgeschwindigkeiten erreichbar sind.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Hierzu ist der breitbandigen Bestrahlungsquelle ein Langpass-Interferenzfilter zugeordnet, der im Spektralbereich von 400 - 780 nm transparent ist, wobei dem Lichtdurchlass für den IR-Kanal eine separate IR-selektive Bestrahlungsquelle zugeordnet ist. Der Erfindung liegt dabei die Erkenntnis zugrunde, dass ein wesentlicher Faktor für die Begrenzung der Abtastgeschwindigkeit der Wärmeeintrag in das Filmmaterial bzw. in die verwendeten Filter ist. Eine Voraussetzung der Bestrahlungsquelle ist, dass diese ausreichend hohe Energiedichten im gewünschten Spektralbereich aufweist, bei einem Farbfilm insbesondere in den gewünschten Spektralfarben rot, grün und blau. Das sind also Strahlungsquellen mit möglichst hohem Energieanteil im sichtbaren Bereich und damit mit relativ hoher Farbtemperatur. Dies sind insbesondere Quecksilberdampf- oder Xenonhochdrucklampen. Bei Hochdrucklampen brennt die Plasmabogenentladung in einem druckfesten Quarzglaskolben, der im eingeschwungenen Zustand seinerseits sichtbar glüht. Die Temperaturen des Plasmas liegen dabei deutlich über 5.000°C. Der Quarzkolben hat eine Temperatur von ca. 800°C und wirkt damit als Glühstrahler mit erheblichem Strahlungsanteil im Infrarotbereich. Der Infrarotkanal ist neben der im Stand der Technik beschriebenen Perforationslocherkennung insbesondere zum Erkennen von Kratzern und anderen Schadstellen geeignet.

Daher wäre eine theoretische Lösung, von der Bestrahlungsquelle nur den Spektralbereich von 400 - 1.050 nm zu transmittieren und die darüber und darunter liegenden Spektralbereiche herauszufinden. Derartige Langpassfilter existieren jedoch nicht. Die Lösung besteht nun darin, dass die Bestrahlungsquelle mittels eines Langpassfilters von 400 - 780 nm gefiltert wird, wohingegen die notwendige Infrarotstrahlung für den IR-Kanal durch eine IR-selektive Bestrahlungsquelle zur Verfügung gestellt wird. Hierdurch lässt sich der Wärmeeintrag in das Filmmaterial bereits erheblich vermindern und somit die Abtastgeschwindigkeit erhöhen.

In einer bevorzugten Ausführungsform ist die IR-selektive Bestrahlungsquelle als IR-LED ausgebildet. Der Vorteil von IR-LEDs ist, dass sie sehr preiswert und nahezu monochromatisch sind.

In einer weiteren bevorzugten Ausführungsform sind die IR-LEDs in mindestens einer Reihe angeordnet, um den spaltförmigen Lichtdurchlass gleichmäßig auszuleuchten.

Zur weiteren Verbesserung der Ausleuchtung des Lichtdurchlasses sind die IR-LEDs in mindestens zwei zueinander versetzt angeordneten Reihen angeordnet, wobei sich deren Strahlengänge überdecken. Dabei ist vorzugsweise zwischen den IR-LEDs und dem Lichtdurchlass eine Diffuserscheibe angeordnet, die die Ausleuchtung weiter homogenisiert.

Vorzugsweise ist zwischen der Diffuserscheibe und dem Lichtdurchlass eine Zylinderlinse angeordnet, wobei weiter vorzugsweise die Diffuserscheibe außerhalb der doppelten Brennweite der Zylinderlinse angeordnet ist. Hierdurch wird der bildseitige Streifen der Diffuserscheibe mit verkleinerter Breite und entsprechend höherer Bestrahlungsstärke auf dem Lichtdurchlass abgebildet.

In einer weiteren bevorzugten Ausführungsform weist die Filmbühne drei Lichtdurchlässe für einen R-, G- und B-Spektralkanal auf, wobei jedem Lichtdurchlass ein schmalbandiger Interferenzfilter zugeordnet ist. Die Interferenzfilter weisen dabei eine Halbwertsbreite von beispielsweise 30 nm (±15 nm) auf. Somit wird der Wärmeeintrag in den Film weiter erheblich reduziert. Da die nicht gewünschten Spektralanteile durch die Interferenzfilter jeweils herausgefiltert werden müssen, stellt der Wärmeeintrag in die Interferenzfilter auch einen geschwindigkeitsreduzierenden Faktor dar. Durch das Langpassfilter sind jedoch bereits wesentliche parasitäre Spektralanteile (UV- und IR-Anteil) herausgefiltert, so dass bei gleicher Lichtstärke der Bestrahlungsquelle der Wärmeeintrag in die Interferenzfilter reduziert wird. Somit kann aber die Lichtstärke der Bestrahlungsquelle erhöht werden, was für eine weitere Erhöhung der Abtastgeschwindigkeit genutzt werden kann, ohne die Interferenzfilter zu zerstören. Die Interferenzfilter sind vorzugsweise als dielektrische Interferenzfilter ausgebildet, wobei prinzipiell auch Metallinterferenzfilter zur Anwendung kommen können.

Die Erfindung wird nachfolgend anhand eines bevorzugten Ausführungsbeispiels näher erläutert. Die Fig. zeigen:
- Fig. 1: ein schematisches Blockschaltbild eines Film-Scanners;
- Fig. 2: eine schematische Darstellung der Ausrichtung von IR-LEDs zu einer Diffuserscheibe und
- Fig. 3: eine schematische Darstellung der IR-Beleuchtungseinheit.

Der Film-Scanner 1 umfasst eine breitbandige Bestrahlungsquelle 2, einen Reflektor 3, eine Linse 4, ein Langpassfilter 5, eine Streuscheibe 20, eine gekrümmte Filmbühne 6 mit nicht dargestellten Lichtdurchlässen, wobei innerhalb der Filmbühne im Bereich des Lichtdurchlasses für den IR-Kanal eine IR-Beleuchtungseinheit 7 und im Bereich der anderen Lichtdurchlässe RGB-Filter 8-10 angeordnet sind. Jeweils zwei Lichtdurchlässen ist ein Objektiv 11, 12 zugeordnet, in deren Bildebene jeweils zwei photosensitive Sensoren 13-16 angeordnet sind, die mit einer sensornahen Elektronik 17, 18 verbunden sind. Die sensornahe Elektronik 17, 18 ist dann jeweils mit einem Steuerrechner 19 verbunden, dem ein nicht dargestellter Massenspeicher zugeordnet ist.

Das von der Lichtquelle 2 direkt bzw. vom Reflektor 3 reflektierte Licht wird von der Linse 4 parallelisiert. Mittels des Langpassfilters 5 wird mit Ausnahme des sichtbaren Lichts im Bereich von 400 - 780 nm der UV- und IR-Spektralanteil der breitbandigen Bestrahlungsquelle 2 herausgefiltert. Die gefilterte Strahlung wird dann an der Streulichtscheibe 20 gestreut, so dass die den Filtern 8-10 zugeordneten Lichtdurchlässe in der Filmbühne 6 gleichmäßig ausgeleuchtet werden. Der dem IR-Kanal zugeordnete Lichtdurchlass wird von der IR-Beleuchtungseinheit 7 ebenfalls gleichmäßig ausgeleuchtet, was später noch näher erläutert wird. Die der IR-Beleuchtungseinheit 7 sowie dem Filter 8 zugeordneten Lichtdurchlässe sind derart zum Objektiv 11 angeordnet, dass die zwei Lichtdurchlässe in einer Ebene senkrecht zur optischen Achse liegen. Damit wird das Bild der Lichtdurchlässe gleichfalls in der Bildebene senkrecht zur optischen Achse abgebildet. Daraus ergibt sich, dass die optische Achse der Abbildungsoptik mit der Mittelsenkrechten einer gedachten Verbindungslinie zwischen zwei Lichtdurchlässen übereinstimmen muss. Gleiches gilt für die Filter 9, 10 und das Objektiv 12. Somit werden alle vier Lichtdurchlässe im gleichen Abbildungsmaßstab scharf abgebildet. Die Filter 8-10 sind vorzugsweise als dielektrische oder metallische Interferenzfilter auswechselbar in der Filmbühne 6 angeordnet, so dass die Filter an das Filmmaterial und/oder das Ausgabemedium anpassbar sind. Die spektral beleuchteten Bereiche des Filmmaterials werden von den photosensitiven Sensoren 13-16 abgetastet und von der sensornahen Elektronik 17, 18 digitalisiert. Die digitalisierten Daten werden vorzugsweise mit Hilfe von angepasster algorithmischer Hardware direkt, beispielsweise in 48-Bit TIF Daten, umgewandelt und zum Steuerrechner 19 übertragen, wobei die Verbindung zwischen Elektronik 17, 18 und Steuerrechner vorzugsweise über Lichtwellenleiter realisiert wird.

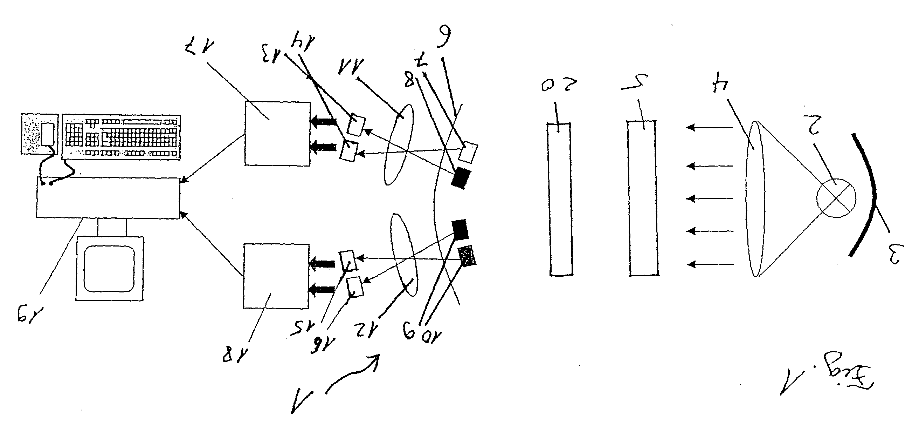

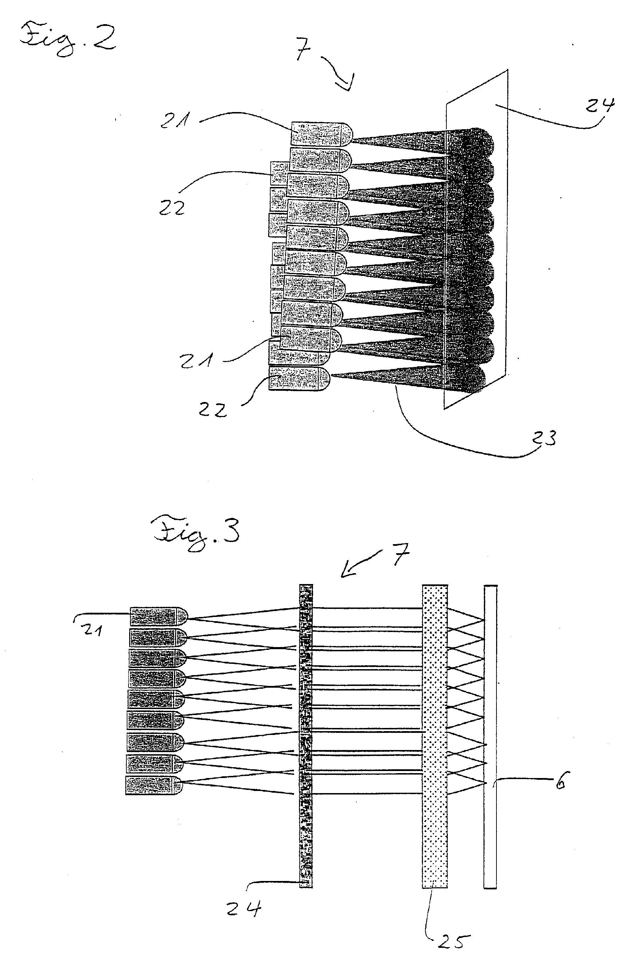

In der Fig. 2 ist ein Teil der IR-Beleuchtungseinheit 7 dargestellt. Die IR-Beleuchtungseinheit 7 umfasst mindestens zwei Reihen von IR-LEDs 21, 22, wobei die beiden Reihen zueinander versetzt und geneigt angeordnet sind. Die divergenten Strahlengänge 23 der IR-LEDs 21, 22 überdecken sich daher und treffen auf eine Diffuserscheibe 24. Aufgrund der Diffuserscheibe 24 ergibt sich somit ein beleuchteter Streifen ausreichender Homogenität.

In der Fig. 3 ist die komplette IR-Beleuchtungseinheit 7 dargestellt. Zwischen der Diffuserscheibe 24 und der Filmbühne 6 mit einem nicht dargestellten streifenförmigen Lichtdurchlass ist eine Zylinderlinse 25 angeordnet. Die Diffuserscheibe 24 wird mit Hilfe der Zylinderlinse 25 so abgebildet, dass die im Fokus der Zylinderlinse 25 projizierte Abbildung des Streifens den Lichtdurchlass richtig ausleuchtet. Die Diffuserscheibe 24 ist objektseitig außerhalb der doppelten Brennweite der Zylinderlinse 25 angeordnet, so dass der bildseitige Streifen mit verkleinerter Breite und entsprechender höherer Bestrahlungsstärke abgebildet wird. Zur Erreichung eines möglichst kompakten Aufbaus der IR-Beleuchtungseinheit wird dabei vorzugsweise eine Zylinderlinse mit kurzer Brennweite gewählt. Die IR-Beleuchtungseinheit 7 ist dabei vorzugsweise derart ausgebildet, dass keine Strahlung von der Bestrahlungsquelle 2 in die IR-Beleuchtungseinheit 7 eintreten kann.

## Patentansprüche

1. Film-Scanner, umfassend eine breitbandige Bestrahlungsquelle und eine Filmbühne, wobei die Filmbühne mindestens einen Lichtdurchlass für einen sichtbaren Spektralkanal und mindestens einen Lichtdurchlass für einen IR-Kanal aufweist, wobei die Lichtdurchlässe auf zugeordnete photoelektrische Detektoren abgebildet werden,
**dadurch gekennzeichnet, dass**
der breitbandigen Bestrahlungsquelle (2) ein Langpass-Interferenzfilter (5) zugeordnet ist, das im Spektralbereich von 400 - 780 nm transparent ist, wobei dem Lichtdurchlass für den IR-Kanal eine separate IR-selektive Bestrahlungsquelle zugeordnet ist.

2. Film-Scanner nach Anspruch 1, **dadurch gekennzeichnet, dass** die IR-selektive Bestrahlungsquelle als mindestens eine IR-LED(21, 22) ausgebildet ist.

3. Film-Scanner nach Anspruch 2, **dadurch gekennzeichnet, dass** die IR-LEDs (21, 22) in mindestens einer Reihe angeordnet sind.

4. Film-Scanner nach Anspruch 3, **dadurch gekennzeichnet, dass** die IR-LEDs (21, 22) in mindestens zwei zueinander versetzt angeordneten Reihen angeordnet sind, wobei sich deren Strahlengänge überdecken.

5. Film-Scanner nach einem der vorangegangenen Ansprüche, **dadurch gekennzeichnet, dass** zwischen der IR-selektiven Bestrahlungsquelle und dem Lichtdurchlass eine Diffuserscheibe (24) angeordnet ist.

6. Film-Scanner nach Anspruch 5, **dadurch gekennzeichnet, dass** zwischen der Diffuserscheibe (24) und dem Lichtdurchlass eine Zylinderlinse (25) angeordnet ist.

7. Film-Scanner nach Anspruch 6, **dadurch gekennzeichnet, dass** die Diffuserscheibe (24) außerhalb der doppelten Brennweite der Zylinderlinse (25) angeordnet ist.

8. Film-Scanner nach einem der vorangegangenen Ansprüche, **dadurch gekennzeichnet, dass** die Filmbühne (6) drei Lichtdurchlässe für einen R-, G- und B-Spektralkanal aufweist, wobei jedem Lichtdurchlass ein Interferenzfilter (8-10) für den jeweiligen Spektralbereich zugeordnet ist.
